# EUROPEAN PATENT SPECIFICATION

(11) **EP 0 926 021 B1**
(45) Date of publication and mention of the grant of the patent: **13.04.2005**
(21) Application number: 98310247.6
(22) Date of filing: 14.12.1998
(51) Int. Cl.: B60R 25/00, B60R 25/04, G07C 9/00

(54) **A security system**
Sicherheitssystem
Système de sécurité

(30) Priority: 20.12.1997 GB 9726828; 27.07.1998 GB 9816170
(43) Date of publication of application: 30.06.1999
(73) Proprietor: Land Rover Group Limited, Jersey, Channel Isles (GB)
(72) Inventor: Greenwood, Jeremy John, Sutton Coldfield, West Midlands B73 5LL (GB)
(74) Representative: Farrow, Robert Michael

(56) References cited:
- WO-A-94/02920
- DE-A- 4 216 326
- GB-A- 2 311 155
- US-A- 5 680 134

## Description

This invention relates to security systems and in particular to a security system suitable for use in a vehicle. The security system is of the type comprising a transmitter which is portable and a receiver which is included in or on the protected unit and which communicate with each other using electromagnetic signals, usually transmitted at radio frequencies.

Such systems can suffer from interference from other sources of radiation which appears around the operating frequency of the system and can prevent its proper operation. It is also known for car thieves to try and cause the remote transmitter to transmit a signal when it is not near the vehicle so that they can try to relay that signal to the vehicle in the hope that the relayed signal will operate the security system.

One proposal to reduce the effects of interference in this type of system is disclosed in US 4 751 396. In this system, a transmitter is arranged to send a signal at a single frequency and is matched to a receiver using both the baud rate of the signal and a code included in the transmission.

Another proposal to reduce the effects of interference in this type of system is disclosed in GB 2311155A which discloses the preamble of claim 1. In this system the remote transmitter sends its signal at two frequencies and uses frequency key shifting (FSK). Verification that an uncorrupted signal has been received is achieved by comparing a coded portion of the received signal with a codeword stored in the receiver. It is a problem with this system that, if interference is suffered at both the transmitted frequencies, then the chances of either transmission being received are reduced.

The use of FSK necessitates the selection of frequencies which are quite close to each other, for example they are typically spaced apart by about 30 kHz. The narrow spacing is necessary to prevent unwanted harmonics causing interference to other systems.

The use of FSK does not significantly improve security over a system which transmits at only a single frequency because potential thieves merely have to include an FSK demodulator in their code grabbing apparatus. In this manner, the communications between the transmitter and receiver can be captured more or less as easily as if they were to be transmitted on only a single frequency.

It is an object of this invention to provide an improved security system.

According to the invention there is provided security system comprising a remote transponder arranged to communicate with a receiver which is associated with a security controller, the remote transponder being arranged in use to transmit a security signal in at least one channel of a predetermined range of channels, the receiver being arranged in use to receive signals in any of said range of channels and the security controller being arranged in use to respond to the receipt of a said security signal by the receiver by performing a security function, characterised in that the receiver is arranged in use to scan said range of channels so as to determine in which channel or channels the security signal has been transmitted.

The receiver may be arranged to scan said range of channels by tuning itself to each of the channels and remaining tuned thereto for long enough to detect whether or not data is being transmitted in the channel which is being scanned.

The receiver may be arranged to abandon the scanning of a channel if it does not detect the transmission of data in that channel.

The receiver may be arranged to use an automatic frequency control (AFC) process to substantially centre itself onto data being transmitted in a channel which is being scanned.

The receiver may be arranged to remain tuned to a channel in which data has been detected until it determines whether or not the detected data comprises a plausible security signal.

The receiver, if it determines the detected data comprises a plausible security signal, may be arranged to remain tuned to that detected data until the security signal has been received.

The receiver may be arranged to abandon the scanning of a particular channel in which a plausible security signal was detected if that security signal becomes implausible.

The receiver may be arranged to continue its scanning of the channels after receiving the security signal in any one of the channels or after abandoning the scanning of any one of the channels.

The receiver may be arranged to remain tuned to a further one of the channels if data is detected in that further channel and to remain tuned thereto for long enough to determine if the data detected in that further channel comprises a plausible security signal, whereby, if the security signal is transmitted in a plurality of channels, the receiver can determine in which one or more of the channels the security signal is or was capable of detection and can provide to the security controller any such security signal which is received and an indication of the channel or channels in which the security signal was received.

The receiver may be arranged to remain tuned to a channel in which data is detected until the expiry of a predetermined time period, the expiry of which time period without the determination of the presence of plausible data being indicative that the detected data does not comprise or no longer comprises a plausible security signal.

The receiver may be arranged to increment a counter for a channel if it determines that the detected data in that channel does not comprise a plausible security signal.

The receiver may be arranged to increment a counter for a channel if the detected data in that channel over-runs or if it under-runs a plausible security signal. The counter may be incremented by a different amount for an over-run than for an under-run.

The receiver may be arranged to reduce the sensitivity of its reception for a channel if the counter exceeds a predetermined value and the sensitivity may be reduced in predetermined stages which may comprise one or more of 4, 8, and 12 dB.

The receiver may be arranged to stop receiving in a channel if, despite the reduction or reductions in sensitivity, the detected data in that channel continues to be determined as implausible.

The counter for a channel may be decremented at, towards or after a scan through the range of channels. The counter may be decremented by a lower value at, towards or after the end of a scan than the counter would be incremented for an over-run or for an under-run during a scan, whereby the counter is arranged to adopt a fast-on but slow-off measure of data plausibility for a channel.

The receiver may be arranged to provide to the security controller a signal indicative of a channel in which a plausible security signal was received.

The security controller may be arranged to compare the channel in which a plausible security signal is first received with the channel in which a following transmission thereof is received and to determine, from the spacing between the channels in which the security signal is received, whether the security signal has been relayed using relaying means, or has suffered interference or has been corrupted.

The remote transponder may be arranged to transmit the security signal first in one of the channels and then in a further one or more than one of the channels and the channel or channels in which the security signal is transmitted may be preset in the remote transponder. The channel or channels may be preset by the resonant frequency of an associated

When the security signal is transmitted in a plurality of channels, the respective associated surface acoustic wave resonators may be connected in parallel and, each time the security signal is transmitted, a first one of the resonators may be turned on to cause the security signal to be transmitted in a channel associated with that resonator and that first resonator may then be turned off and the next one of the resonators may then be turned on to cause the same security signal to be transmitted in a channel associated with that next one of the resonators.

When the security signal is transmitted in a plurality of channels, the resonant frequencies of the surface acoustic wave resonators may be selected such that there is a predetermined frequency gap between the channels in which the security signal is transmitted.

The remote transponder may be arranged to indicate to the receiver in which one or more than one of the predetermined range of channels the security signal is to be transmitted.

The remote transponder may be arranged to send an indicating signal to the receiver, which indicating signal indicates the channel or channels in which the security signal is to be transmitted.

The security controller may be arranged to send a specifying signal to the remote transponder in which specifying signal the security controller is arranged to specify to the remote transponder the channel or channels in which the remote transponder is to transmit the security signal.

When the security signal is transmitted in a plurality of channels, the frequency of at least one of the at least two channels in which the remote transponder transmits its signals may be alterable between transmissions.

The frequencies of the channels comprising said predetermined range of channels may be pre-programmed into the remote transponder and into at least one of the receiver or the security controller.

The remote transponder may be arranged to transmit the security signal in more than two of said predetermined range of channels and the security controller may be arranged to respond to said security signal only if it is received by the receiver in at least two channels.

Said predetermined range of channels may be 32 or 10 in number.

The channels used for transmission of the security signal may be of substantially equal width. When the security signal is transmitted in two or more channels, the channels used for transmission of the security signal may be spaced apart by at least one channel.

Said predetermined range of channels may have a bandwidth in the order of 480 kHz.

The security signal may be transmitted in two or more channels and the channels used for transmission of the security signal may be spaced apart by at least three channels.

Said predetermined range of channels may have a bandwidth in the order of 1 MHz.

The remote transponder may be arranged to transmit the security signal only in response to a request signal transmitted to it by a transmitting means. The request signal may be transmitted as a result of an action of a user of a vehicle, to which the system has been fitted, triggering the transmitting means. The transmitting means may be triggered by operation of an opening mechanism of a closure member of the vehicle. The receiver may be arranged, after completing a scan through said range of channels, to wait for a predetermined delay period before commencing another scan.

The invention also provides: a security controller for a security system according to the invention; a remote transponder for a security system according to the invention, the remote transponder being arranged to transmit the security signal first in one of the range of channels and then in at least a further one of the range of channels; and a vehicle including a security system according to the invention.

The invention also provides a method of controlling a security system, the system comprising a remote transponder arranged to communicate with a receiver which is associated with a security controller, the remote transponder being arranged in use to transmit a security signal in at least one channel of a predetermined range of channels, the receiver being arranged in use to receive signals in any of said range of channels and the security controller being arranged in use to respond to the receipt of a said security signal by the receiver by performing a security function, characterised in that the method includes scanning said range of channels so as to determine in which channel or channels the security signal has been transmitted.

The method may include scanning said range of channels by tuning the receiver to each of the channels and remaining tuned thereto for long enough to detect whether or not data is being transmitted in the channel which is being scanned.

The method may include abandoning the scanning of a channel if the receiver does not detect the transmission of data in that channel.

The method may include using an automatic frequency control (AFC) process to substantially centre the receiver onto data being transmitted in a channel which is being scanned.

The method may include remaining tuned to a channel in which data has been detected until determining whether or not the detected data comprises a plausible security signal.

The method may include remaining tuned, if the receiver determines that the detected data comprises a plausible security signal, to the detected data until the security signal has been received.

The method may include abandoning the scanning of a particular channel in which a plausible security signal was detected if that signal becomes implausible.

The method may include continuing to scan said range of channels after receiving the security signal in any one of the channels or after abandoning the scanning of any one of the channels.

The method may include keeping the receiver tuned to a further one of the channels if data is detected in that further channel and keeping the receiver tuned thereto for long enough to determine if the data detected in that further channel comprises a plausible security signal, whereby, if the security signal is transmitted in a plurality of channels, the method includes determining in which one or more of the channels the security signal is or was capable of detection and providing to the security controller any such security signal which is received and an indication of the channel or channels in which the security signal was received.

The method may include keeping the receiver tuned to a channel in which data is detected until the expiry of a predetermined time period, the expiry of which time period without determining the presence of plausible data indicating that the detected data does not comprise or no longer comprises a plausible security signal.

The method may include incrementing a counter for a channel if the receiver determines that the detected data in that channel does not comprise a plausible security signal.

The method may include incrementing a counter for a channel if the detected data in that channel over-runs or if it under-runs a plausible security signal. The method may include incrementing the counter by a different amount for an over-run than for an under-run.

The method may include reducing the sensitivity of reception of the receiver for a channel if the counter exceeds a predetermined level.

The method may include reducing the sensitivity in predetermined stages. The method may include stopping the receiver from receiving in a channel if, despite reducing the sensitivity of the receiver, the detected data in that channel continues to be determined as implausible.

The method may include decrementing the counter for a channel at, towards or after a scan through the range of channels and may include decrementing the counter for a channel by a lower value at, towards or after the end of a scan than the counter would be incremented for an over-run or for an under-run during a scan, whereby the method may include the counter adopting a fast-on but slow-off measure of data plausibility for a channel.

The method may include providing the security controller with a signal indicative of a channel in which a plausible security signal was received.

The method may include comparing the channel in which a plausible security signal is first received with the channel in which a following transmission thereof is received and determining, from the spacing between the channels in which the security signal is received, whether the security signal has been relayed using a relaying means or has suffered interference or has been corrupted.

The method may include transmitting the security signal first in one of the channels and then in a further one or more than one of the channels.

The method may include indicating from the remote transponder to the receiver in which one or more than one of the predetermined range of channels the security signal is to be transmitted.

The method may include sending to the receiver from the remote transponder an indicating signal which indicates the channel or channels in which the security signal is to be transmitted.

The method may include sending a specifying signal to the remote transponder from the security controller, in which specifying signal the security controller specifies the channel or channels in which the remote transponder is to transmit the security signal.

The method may include when the security signal is transmitted in a plurality of channels, altering between transmissions of the security signal the frequency of at least one of the plurality of channels in which the remote transponder transmits the security signal.

The method may include transmitting the security signal in more than two of said predetermined range of channels and arranging the security controller to respond to the security signal only if it is received by the receiver in at least two channels.

The method may include when the security signal is transmitted in two or more channels, spacing apart the channels used for transmission of the security signal by at least one channel.

The method may include waiting for a predetermined delay period after completing a scan through said range of channels before commencing another scan.

Preferred embodiments of the invention will now be described by way of example only and with reference to the accompanying drawings, in which:

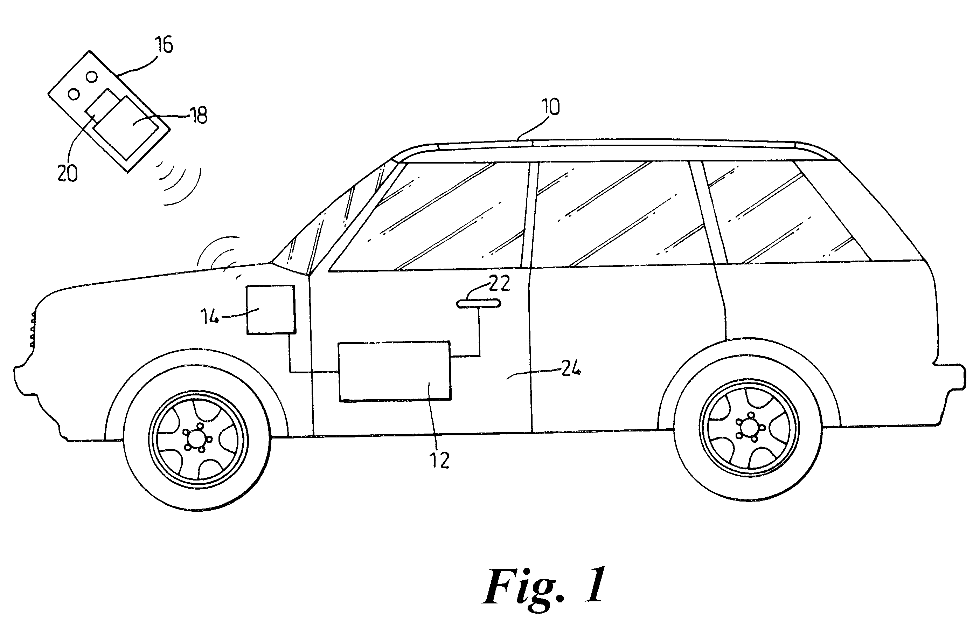

Figure 1 is a schematic view of a vehicle including a security system according to the invention;
Figure 2 is a flow chart of a method of operation of a remote transponder of the security system of Figure 1;
Figure 3 is a flow chart of a method of operation of a receiver of a security controller of Figure 1; and
Figures 4a to 4c are a graphical representation of part of the method of Figure 3.

Referring to the figures, a vehicle 10 comprises a security system which includes a security controller 12 which has associated with it a first transmitter / receiver unit 14 and which controls the operation of various items on the vehicle including the door locks and an engine immobiliser.

The security system also includes a remote transponder 16 which is portable and intended in use to be carried by a user. The transponder 16 includes a second transmitter / receiver unit 18 and an associated control circuit 20 and is arranged to communicate selectively with the security controller 12.

The vehicle 10 has a closure member operating mechanism in the form of a door handle 22 on the driver's door 24 which has a microswitch (not shown separately) in it to enable the controller 12 to detect when the door handle 22 is operated to gain entry to the vehicle 10. The controller 12 reacts to operation of the door handle 22 by causing the first transmitter / receiver unit 14 to transmit a request signal to the remote transponder 16 as will be described below.

The transmitter / receiver units 14, 18 each have an operative bandwidth in the order of 480 kHz. This total operative band is divided into 32 frequency bands or channels, each about 15 kHz in width. The channels are adjacent to one another, are non-overlapping and are distinguishable from each other by their frequency of operation Fn. The channels rise in frequency from (n=1) to (n=nₘₐₓ). In this embodiment, having 32 channels, n rises between successive channels from (n=1) to (n=32) evenly spaced across the total bandwidth of 480 kHz.

Each of the transmitter / receiver units 14, 18 is arranged such that it can transmit in each of the channels independently, receive signals in each of the channels, and distinguish between signals received in different channels. The control circuit 20 in the transponder 16 and the security controller 12 on the vehicle 10 control the timing and frequency of the transmissions and process the signals received by their respective receivers.

When a user approaches the vehicle 10 and lifts the door handle 22, the controller 12 causes the first transmitter / receiver unit 14 to transmit in one of the channels a request signal, for example at 125 kHz, which requests that the transponder 16 send a coded security signal in response.

The transponder 16 is arranged to respond to the request signal by transmitting in two of the channels and the response comprises a coded security signal which is transmitted first in one channel and then in a second one. Using successive transmissions means that harmonics are not generated and the problems associated with frequency shift keying (FSK) do not occur, which in turn means that channel spacing is not restricted as it might be if FSK were to be used.

The channels used for the response are fixed in the transponder 16 during manufacture by the inclusion of surface acoustic wave resonators (SAWs) (not shown separately) in the control circuit 20. The SAWs are connected in parallel and arranged to be capable of being switched on independently and selectively.

To send the response, one of the SAWs is turned on using a pin diode and this results in the security signal being transmitted in the channel in which that particular SAW's resonant frequency falls. This SAW is then turned off and the other SAW is turned on, again using a pin diode. The security signal is then transmitted in the channel in which the resonant frequency of the second SAW falls. The second SAW is then turned off and transmission of the response for that receipt of the request signal is complete.

The SAWs are selected such that their nominal resonant frequencies result in the transmission channels of the response have a spacing of at least three or four channels between them, or more preferably a spacing of at least 100 kHz.

The SAWs' frequencies cannot be guaranteed as fixed, as their nominal resonant frequency will drift with time and variations in temperature. Because of this, it is not possible to specify with absolute certainty which of the channels will be used to transmit the response and the receiver / transmitter unit 14 must therefore scan all the channels to find the one or more than one in which the security signal can be detected.

To scan across all the channels Fn to Fnₘₐₓ, the transmitter / receiver unit 14 scans the channels by tuning itself to each one in turn and waiting in each channel Fn long enough to detect whether there is data present in an expected format, which can then be analysed to determine if it comprises a security signal. One example of data in an expected format can be achieved by providing the security signal with a long preamble of logic "1" bits so as to make it easy to find and then keeping the receiver of the transmitter / receiver unit 14 tuned into each channel long enough to detect a recognisable portion of this preamble.

When the transmitter / receiver unit 14 has found a channel in which data appears to be present, it uses an automatic frequency control process to centre itself onto that detected data and stays tuned to it until the security signal is complete and plausible, until the data becomes implausible (e.g. by over-running or under-running), or until a time-out has expired.

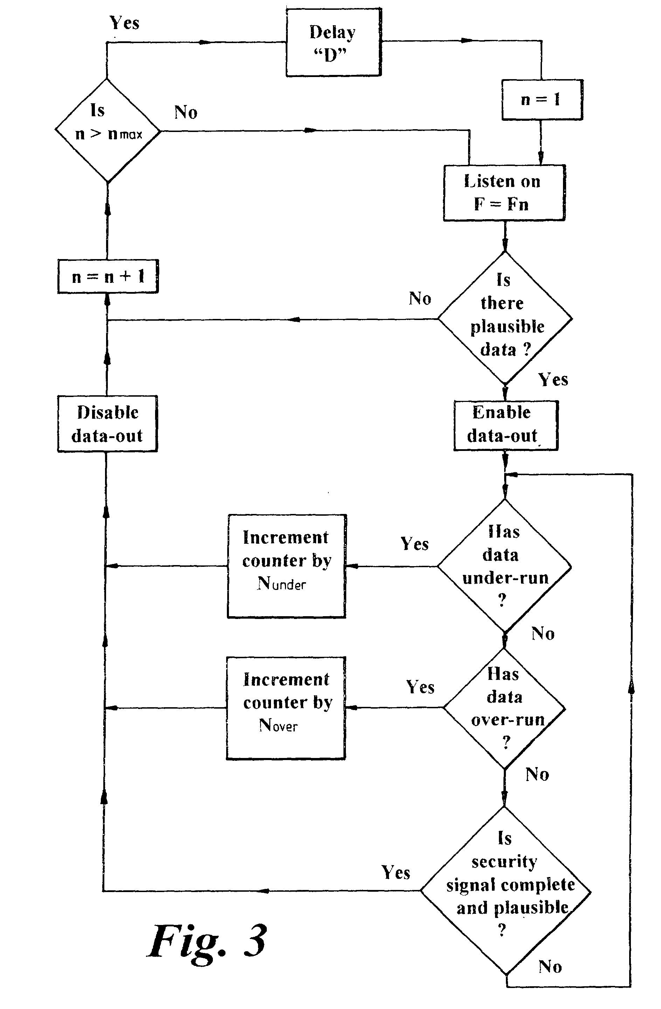

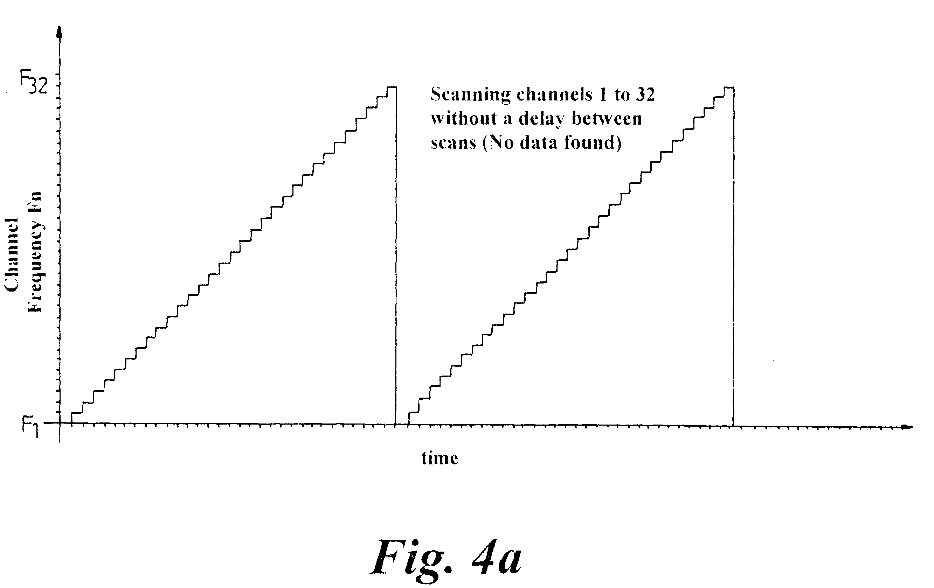

The scanning operation is best understood in greater detail with particular reference to Figure 3 and Figures 4a to 4c.

In Figure 4a, the basic scanning operation can be observed but without the detection of data in any of the channels. In the basic scanning operation, the transmitter / receiver unit 14 is constantly scanning through all 32 channels in succession looking for the security signal. Each scan starts at the channel having the lowest frequency Fn (where n=1). If no data is detected, the scan moves onto the next channel F(n=n+1). If the transmitter / receiver unit 14 scans through all 32 of the channels (Fn to Fnₘₐₓ₎ without detecting data, the scan starts again at F(n=1). In any case, once Fnₘₐₓ has been scanned, n is set back to 1, so that the next scan is ready to start.

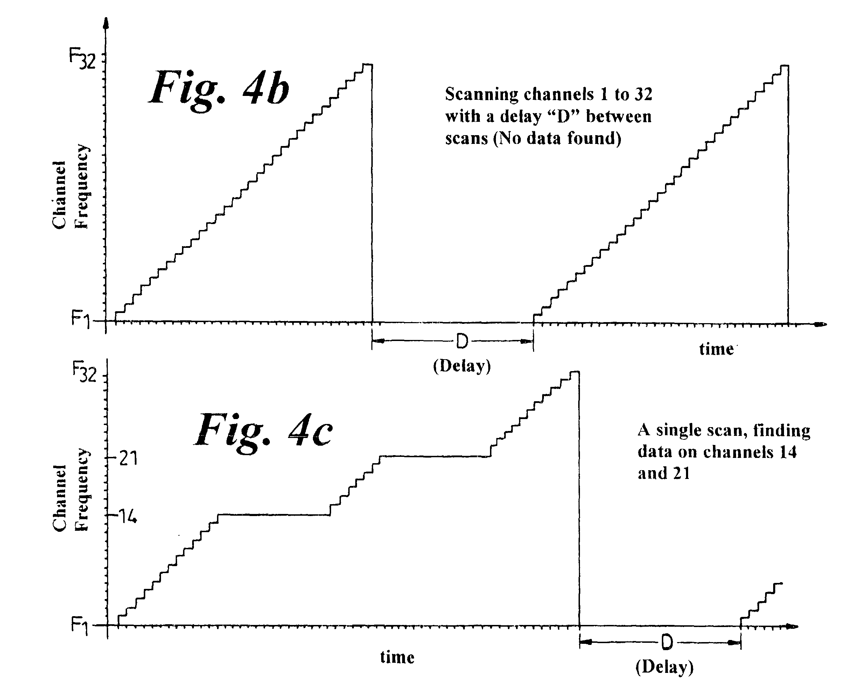

With particular reference to Figures 3 and 4b, a delay period D is optionally included between scans so as to reduce power consumption. The delay period D is preferably set at a length which is not long enough to cause inconvenience to a user who might have to wait for the delay D to end before the scanning could start. A suitable and convenient delay D might be found to exist in the range of 32 to 256 ms.

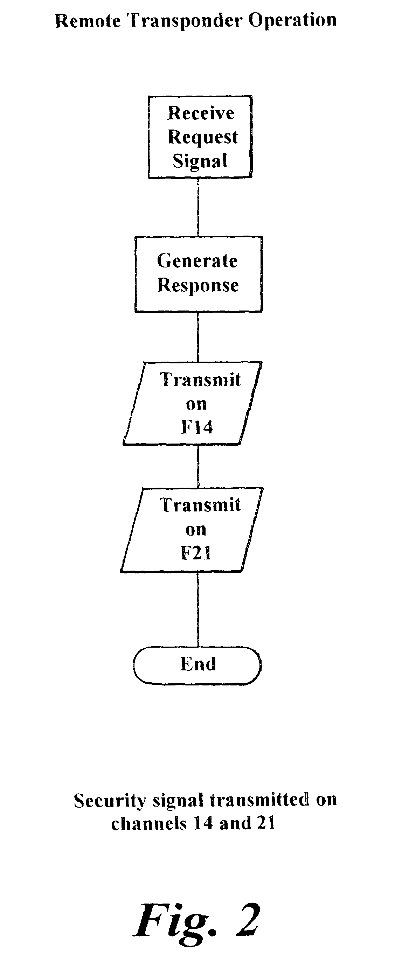

In Figure 4c, only one scan from either of Figures 4a or 4b is shown, the transmitter / receiver unit 14 having transmitted the security signal in two channels, first in F(n=14) and then in F(n=21) in accordance with the flow chart of Figure 2. Data can be seen to have been detected in channels 14 and 21 and when such detected data is determined within the receiver of the transmitter / receiver 14 to be a plausible security signal, it is passed to the remainder of the security controller 12 for implementation as a predetermined security function.

When data has been detected in the expected format in any particular channel, found to be plausible and passed to the remainder of the security controller, the data output to the security controller from the transmitter / receiver 14 is disabled and the next channel in succession is scanned, in search of a repeat transmission (such as the one found in the above example in channel 21).

If data detected in a channel under-runs or over-runs a plausible security signal, that event is noted by incrementing by a constant N_{und} or Nₒᵥₑᵣ respectively a counter value for a register associated with that channel. A different constant is used when incrementing the counter for each of an under-run and an over-run. The constants are not equal and the constant used for an over-run is the greater because an over-run usually indicates that the signal has been subjected to interference.

If the counter value for a given channel reaches one of a series of thresholds, the transmitter / receiver unit 14 is arranged to assume that there is an interfering signal which is causing it to waste time looking for the security signal in that channel at that time. When this happens, the transmitter / receiver unit 14 first reduces the sensitivity of the receiver of its transmitter / receiver unit 14 for the affected channel and does so in graduated steps (for example 4, 8, 12 dB).

If the counter value exceeds a preset maximum despite the reduction or reductions in sensitivity, the transmitter / receiver unit 14 will finally shut down for that channel or channels which is / are then by-passed completely until the counter has been cleared as outlined below.

At, towards or after the end of each scan, the counter value for the counter of each channel is decremented. The counter is decremented by a smaller amount than the value of either N_{und} or Nₒᵥₑᵣ. For example, N_{und} may be 4, Nₒᵥₑᵣ may be 5 and the counter decremented at, towards or after each scan by 1. In this manner, the counter adopts a "fast-on" but "slow-off' measure of data plausibility for each channel. This feature means that it takes 4 or 5 scans, without either under-running or over-running, to clear the counter for a channel for each under-run or over-run as the case may be of data in that channel.

If a channel is being by-passed because its counter has exceeded a predetermined threshold, which might for this example be between 12 and 16, the counter is still decremented by 1 at, towards or after each scan along with the counters for all the other channels. In this manner, any affected channel is only ignored for a predetermined number of scans, e.g. 12 to 16, and the system can thus accommodate transient interference in any one or more than one of the channels.

A different way of deciding that the data is implausible would be to stay centred onto a string of detected data for a predetermined time period, the expiry of which could be pre-programmed into the receiver of the transmitter / receiver unit 14 as indicative that the data being received does not comprise a plausible security signal. For example, such a time-out could be set to correspond to an over-run condition.

When the transmitter / receiver unit 14 has detected a plausible security signal and passed it on to the remainder of the security controller 12, it is followed by a message which identifies the channel in which the security signal was detected. The security controller 12 uses this information about that channel to make a comparison with the other channel (if any) in which the security signal was detected and to judge whether the channel spacing is sufficient to indicate a valid response or one which has suffered interference. If the security signal is detected in only one channel, then information about which channel that might be is of limited use, except for example to verify that the security signal was detected in a valid channel.

By sending out the security signal on first one channel and then on another one, instead of for example both at the same time, the likelihood of generating undesirable harmonics is significantly reduced.

In a second embodiment of the invention, the response comprises the security signal sent in only one channel and thus saves the cost of the second SAW. Such an embodiment is useful in a market where there is a reduced risk of vehicle theft. In most cases, however, it is preferred to transmit the security signal in two or more channels as described in the first embodiment so as to provide protection against interference in any one channel.

The use of a bandwidth of about 480 kHz, still around a central frequency of about 433 MHz and which is divided into 32 channels each being about 15 kHz wide, could be applied to other embodiments of the invention. Embodiments in which the security signal is transmitted on more than one channel have the advantage that a channel spacing of three or four can be used to transmit the security signals closer to each other than would be easy to detect using a commercially available UHF receiver of reasonable cost and which might have a bandwidth of, for example, 500 kHz.

In this manner, a thief trying to use a code scanner based on such technology would find it more difficult to collect the security signal and to retransmit it. The security signals would appear as a single signal and that is what would be retransmitted after capture or relaying. Because the retransmitted or relayed signal is not two signals of narrow bandwidth which are close to each other, the security controller 12 could determine that such a signal was false or corrupted. Channel spacing of three or four also provides sufficient spacing to take account of the tolerances and drift of any SAW used.

In a third embodiment of the invention, the channels used for transmitting the security signal can be altered by the remote transponder 16 between transmissions of the response and the security controller 12 sends a specifying signal to the remote transponder 16 in order to specify in which one or more of the channels the transponder 16 is to send the security signal.

In this embodiment, the controller 12 is preferably arranged to select a different pair of channels for each response, i.e. each time the door handle 22 is lifted. This is achieved by an algorithm in the controller 12 (e.g. a random number generator which operates in the range of 1 to 32) and makes it harder for a thief to anticipate which channels will be used next.

In a fourth embodiment of the invention, the frequency of the response can also be altered under the control of the remote transponder 16. Upon receipt of a request signal, the remote transponder 16 sends an indicating signal to the transmitter / receiver 14 in order to specify in which one or more of the channels the security signal is to be sent.

Interference or corruption, for example from amateur radio transmissions, is usually limited to a relatively narrow bandwidth of about 50 kHz. Therefore, provided the channels chosen or specified for the third and fourth embodiments are not adjacent, the security signal will still be received and plausible in at least one channel even if the frequency of the interference falls within one of the channels.

The spacing of the channels in this case is such that they are always spaced apart by at least one channel so that a 50 kHz signal cannot interfere with both channels. If a different bandwidth or a different number of channels are used, the channel spacing would merely be altered to suit the new bandwidth or number of channels so as to avoid interference from this or another interfering signal.

In a fifth embodiment of the invention, the transponder 16 is arranged to transmit a signal in each of three or more of the channels. The receiver (14) is arranged to scan all of the channels and to respond by producing a remobilisation signal if it receives the signal in at least any two of the channels. In this way the exact frequency of the transmission is not critical, the only requirement being that two signals in different channels are received. This makes the fluctuations in frequency which can result from temperature changes less harmful to the system, whilst allowing the system to operate if there is interference in one of the channels.

The transmitter / receiver unit 14 does not need to be a separate unit and could be included in the security controller 12 in this and in any other embodiment.

In each embodiment, if a thief tries to trigger the transponder 16 when it is remote from the vehicle and tries to relay the transmitted signal to the vehicle 10, he will encounter at least two problems. Firstly, he is unlikely to be able to transmit a signal to the transponder 16 which is in the correct channel to produce a response. Secondly, if he does produce a response, he is unlikely to be able to detect accurately enough in which channel or channels the security signal is being transmitted to be able to relay it correctly.

The frequency band should not be considered as limited to 480 kHz in any embodiment. For example, it may be possible to use a bandwidth of 1 MHz and to divide it into 10 channels. This would provide a channel bandwidth of 100 kHz and a channel spacing of only one channel would be adequate to substantially reduce the likelihood of interference. In addition, the cost of equipment which can distinguish between frequency bands of the order of 100 kHz is currently high and is not likely to be in the possession of most car thieves.

## Claims

1. A security system comprising a remote transponder (16) arranged to communicate with a receiver (14) which is associated with a security controller (12), the remote transponder (16) being arranged in use to transmit a security signal in at least one channel of a predetermined range of channels (Fn to Fnₘₐₓ), the receiver (14) being arranged in use to receive signals in any of said range of channels and the security controller (12) being arranged in use to respond to the receipt of a said security signal by the receiver (14) by performing a security function, **characterised in that** the receiver (14) is arranged in use to scan said range of channels (Fn to Fnₘₐₓ) so as to determine in which channel or channels the security signal has been transmitted.

2. A security system according to Claim 1, wherein the receiver (14) is arranged to scan said range of channels (Fn to Fnₘₐₓ) by tuning itself to each of the channels and remaining tuned thereto for long enough to detect whether or not data is being transmitted in the channel which is being scanned.

3. A security system according to Claim 2, wherein the receiver (14) is arranged to use an automatic frequency control (AFC) process to substantially centre itself onto data being transmitted in a channel which is being scanned.

4. A security system according to any preceding claim, wherein the receiver (14) is arranged to continue its scanning of the channels (Fn to Fnₘₐₓ) after receiving the security signal in any one of the channels or after abandoning the scanning of any one of the channels.

5. A security system according to any preceding Claim, wherein the receiver (14) is arranged to increment a counter for a channel if it determines that data detected in that channel over-runs or if it under-runs a plausible security signal.

6. A security system according to Claim 5, wherein the receiver (14) is arranged to reduce the sensitivity of its reception for a channel if the counter exceeds a predetermined value.

7. A security system according to Claim 5 or Claim 6, wherein the receiver (14) is arranged to stop receiving in a channel if, despite the reduction or reductions in sensitivity, the detected data in that channel continues to be determined as implausible.

8. A security system according to any preceding claim, wherein the remote transponder (16) is arranged to transmit the security signal first in one of the channels and then in a further one or more than one of the channels.

9. A security system according to Claim 1, wherein the remote transponder (16) is arranged to indicate to the receiver (14) in which one or more than one of the predetermined range of channels (Fn to Fnₘₐₓ) the security signal is to be transmitted or the remote transponder (16) is arranged to send an indicating signal to the receiver (14), which indicating signal indicates the channel or channels in which the security signal is to be transmitted.

10. A method of controlling a security system, the system comprising a remote transponder (16) arranged to communicate with a receiver (14) which is associated with a security controller (12), the remote transponder (16) being arranged in use to transmit a security signal in at least one channel of a predetermined range of channels (Fn to Fnₘₐₓ), the receiver (14) being arranged in use to receive signals in any of said range of channels (Fn to Fnₘₐₓ) and the security controller (12) being arranged in use to respond to the receipt of a said security signal by the receiver (14) by performing a security function, **characterised in that** the method includes scanning said range of channels (Fn to Fnₘₐₓ) so as to determine in which channel or channels the security signal has been transmitted.

## Patentansprüche

1. Sicherheitssystem, das folgendes umfaßt: einen entfernten Transponder (16), der so ausgelegt ist, daß er mit einem Empfänger (14) kommuniziert, der einem Sicherheitscontroller (12) zugeordnet ist, wobei der entfernte Transponder (16) so ausgelegt ist, daß er bei Verwendung ein Sicherheitssignal in mindestens einem Kanal eines vorbestimmten Bereichs von Kanälen (Fn bis Fnₘₐₓ) überträgt, wobei der Empfänger (14) so ausgelegt ist, daß er bei Verwendung Signale in einem beliebigen des Bereichs von Kanälen empfängt, und der Sicherheitscontroller (12) ausgelegt ist, daß er bei Verwendung auf den Empfang eines derartigen Sicherheitssignals durch den Empfänger (14) durch Ausführen einer Sicherheitsfunktion reagiert, **dadurch gekennzeichnet, daß** der Empfänger (14) so ausgelegt ist, daß er den Bereich von Kanälen (Fn bis Fnₘₐₓ) scannt, um zu bestimmen, in welchem Kanal oder in welchen Kanälen das Sicherheitssignal übertragen worden ist.

2. Sicherheitssystem nach Anspruch 1, wobei der Empfänger (14) so ausgelegt ist, daß er den Bereich von Kanälen (Fn bis Fnₘₐₓ) scannt, indem er sich selbst auf jeden der Kanäle abstimmt und lange genug darauf abgestimmt bleibt, um zu detektieren, ob in dem Kanal, der gescannt wird, Daten übertragen werden oder nicht.

3. Sicherheitssystem nach Anspruch 2, wobei der Empfänger (14) so ausgelegt ist, daß er einen Prozeß der automatischen Scharfabstimmung (AFC - automatic frequency control) verwendet, um sich im wesentlichen auf Daten zu zentrieren, die in einem Kanal übertragen werden, der gescannt wird.

4. Sicherheitssystem nach einem der vorhergehenden Ansprüche, wobei der Empfänger (14) so ausgelegt ist, daß er sein Scannen der Kanäle (Fn bis Fnₘₐₓ) nach dem Empfangen des Sicherheitssignals in einem beliebigen der Kanäle oder nach dem Abbrechen des Scannens eines beliebigen der Kanäle fortsetzt.

5. Sicherheitssystem nach einem der vorhergehenden Ansprüche, wobei der Empfänger (14) so ausgelegt ist, daß er einen Zähler für einen Kanal inkrementiert, wenn er bestimmt, daß in diesem Kanal detektierte Daten ein plausibles Sicherheitssignal überlaufen oder unterlaufen.

6. Sicherheitssystem nach Anspruch 5, wobei der Empfänger (14) so ausgelegt ist, daß er die Empfindlichkeit seines Empfangs für einen Kanal reduziert, wenn der Zähler einen vorbestimmten Wert übersteigt.

7. Sicherheitssystem nach Anspruch 5 oder 6, wobei der Empfänger (14) so ausgelegt ist, daß er den Empfang in einem Kanal stoppt, wenn trotz Reduzierung oder Reduzierungen bei der Empfindlichkeit die detektierten Daten in diesem Kanal weiterhin als implausibel bestimmt werden.

8. Sicherheitssystem nach einem der vorhergehenden Ansprüche, wobei der entfernte Transponder (16) so ausgelegt ist, daß er das Sicherheitssignal zuerst in einem der Kanäle und dann in einem weiteren oder mehr als einem der Kanäle überträgt.

9. Sicherheitssystem nach Anspruch 1, wobei der entfernte Transponder (16) so ausgelegt ist, daß er dem Empfänger (14) angibt, in welchem einen oder mehr als einem des vorbestimmten Bereichs von Kanälen (Fn bis Fnₘₐₓ) das Sicherheitssignal übertragen werden soll, oder der entfernte Transponder (16) so ausgelegt ist, daß er ein anzeigendes Signal an den Empfänger (14) sendet, wobei das anzeigende Signal den Kanal oder die Kanäle anzeigt, in dem/denen das Sicherheitssignal übertragen werden soll.

10. Verfahren zum Steuern eines Sicherheitssystems, wobei das System einen entfernten Transponder (16) umfaßt, der so ausgelegt ist, daß er mit einem Empfänger (14) kommuniziert, der einem Sicherheitscontroller (12) zugeordnet ist, wobei der entfernte Transponder (16) so ausgelegt ist, daß er bei Verwendung ein Sicherheitssignal in mindestens einem Kanal eines vorbestimmten Bereichs von Kanälen (Fn bis Fnₘₐₓ) überträgt, wobei der Empfänger (14) so ausgelegt ist, daß er bei Verwendung Signale in einem beliebigen des Bereichs von Kanälen (Fn bis Fnₘₐₓ) empfängt, und der Sicherheitscontroller (12) ausgelegt ist, daß er bei Verwendung auf den Empfang eines derartigen Sicherheitssignals durch den Empfänger (14) durch Ausführen einer Sicherheitsfunktion reagiert, **dadurch gekennzeichnet, daß** des Bereichs von Kanälen (Fn bis Fnₘₐₓ₎ beinhaltet, um zu bestimmen, in welchem Kanal oder in welchen Kanälen das Sicherheitssignal übertragen worden ist.

## Revendications

1. Système de sécurité comprenant un transpondeur distant (16) conçu pour communiquer avec un récepteur (14) associé à une unité de commande de sécurité (12), le transpondeur distant (16) étant conçu pour transmettre, en service, un signal de sécurité sur au moins un canal d'une plage de canaux prédéterminée (Fn à Fnₘₐₓ), le récepteur (14) étant conçu pour recevoir, en service, des signaux sur un canal quelconque de ladite plage de canaux, et l'unité de commande de sécurité (12) étant conçue pour répondre, en service, à la réception d'un dit signal de sécurité par le récepteur (14) en exécutant une fonction de sécurité, **caractérisé en ce que** le récepteur (14) est conçu pour balayer, en service, ladite plage de canaux (Fn à Fnₘₐₓ) afin de déterminer le canal ou les canaux sur lequel ou lesquels le signal de sécurité a été transmis.

2. Système de sécurité selon la revendication 1, dans lequel le récepteur (14) est conçu pour balayer ladite plage de canaux (Fn à Fnₘₐₓ) en s'accordant sur chacun des canaux et en y restant accordé suffisamment longtemps pour détecter si des données sont transmises ou non sur le canal balayé.

3. Système de sécurité selon la revendication 2, dans lequel le récepteur (14) est conçu pour utiliser un processus de commande automatique de fréquence (AFC) pour se centrer substantiellement sur les données en cours de transmission sur un canal balayé.

4. Système de sécurité selon l'une quelconque des revendications précédentes, dans lequel le récepteur (14) est conçu pour poursuivre son balayage des canaux (Fn à Fnₘₐₓ) après avoir reçu le signal de sécurité sur l'un quelconque des canaux ou après avoir abandonné le balayage d'un quelconque des canaux.

5. Système de sécurité selon l'une quelconque des revendications précédentes, dans lequel le récepteur (14) est conçu pour incrémenter un compteur pour un canal s'il détermine que les données détectées sur ce canal sont trop nombreuses ou insuffisantes pour constituer un signal de sécurité plausible.

6. Système de sécurité selon la revendication 5, dans lequel le récepteur (14) est conçu pour réduire la sensibilité de sa réception pour un canal si le compteur dépasse une valeur prédéterminée.

7. Système de sécurité selon la revendication 5 ou la revendication 6, dans lequel le récepteur (14) est conçu pour interrompre la réception sur un canal si, en dépit de la ou des réduction(s) de sensibilité, il est déterminé que les données détectées sur ce canal continuent de ne pas être plausibles.

8. Système de sécurité selon l'une quelconque des revendications précédentes, dans lequel le transpondeur distant (16) est conçu pour transmettre le signal de sécurité tout d'abord sur un des canaux, puis sur un autre ou plusieurs des canaux.

9. Système de sécurité selon la revendication 1, dans lequel le transpondeur distant (16) est conçu pour indiquer au récepteur (14) le canal ou les canaux de la plage de canaux prédéterminée (Fn à Fnₘₐₓ) sur lequel ou lesquels le signal de sécurité va être transmis, ou le transpondeur distant (16) est conçu pour envoyer un signal indicateur au récepteur (14), lequel signal indicateur indique le canal ou les canaux sur lequel ou lesquels le signal de sécurité va être transmis.

10. Procédé de commande d'un système de sécurité, le système comprenant un transpondeur distant (16) conçu pour communiquer avec un récepteur (14) associé à une unité de commande de sécurité (12), le transpondeur distant (16) étant conçu pour transmettre, en service, un signal de sécurité sur au moins un canal d'une plage de canaux prédéterminée (Fn à Fnₘₐₓ), le récepteur (14) étant conçu pour recevoir, en service, des signaux sur un canal quelconque de ladite plage de canaux (Fn à Fnₘₐₓ). et l'unité de commande de sécurité (12) étant conçue pour répondre, en service, à la réception d'un dit signal de sécurité par le récepteur (14) en exécutant une fonction de sécurité, **caractérisé en ce que** le procédé comprend le balayage de ladite plage de canaux (Fn à Fnₘₐₓ) afin de déterminer le canal ou les canaux sur lequel ou lesquels le signal de sécurité a été transmis.
